Europäisches Patentamt

European Patent Office

Office européen des brevets

(19)

(11) **EP 0 787 111 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(21) Anmeldenummer: **95935330.1**

(22) Anmeldetag: **13.10.1995**

(51) Int Cl.$^6$: **C03B 11/00**, C03B 23/24, C03B 7/16

(86) Internationale Anmeldenummer:
**PCT/DE95/01421**

(87) Internationale Veröffentlichungsnummer:
**WO 96/12681 (02.05.1996 Gazette 1996/20)**

(54) **VERFAHREN ZUR HERSTELLUNG VON GLASFORMLINGEN NACH DEM PRESSVERFAHREN SOWIE ZUR ANWENDUNG DES VERFAHRENS BESONDERS GEEIGNETE VORRICHTUNG**

PROCESS FOR MANUFACTURING MOULDED GLASS ARTICLES USING A PRESS PROCESS, AND A DEVICE WHICH IS ESPECIALLY SUITABLE FOR CARRYING OUT THE PROCESS

PROCEDE DE FABRICATION D'ARTICLES MOULES EN VERRE, PAR MOULAGE PAR COMPRESSION ET DISPOSITIF SPECIALEMENT APPROPRIE POUR LA MISE EN OEUVRE DE CE PROCEDE

(84) Benannte Vertragsstaaten:
**DE FR GB IE IT**

(30) Priorität: **19.10.1994 DE 9416814 U**

(43) Veröffentlichungstag der Anmeldung:
**06.08.1997 Patentblatt 1997/32**

(73) Patentinhaber: **PÖTING GMBH & CO. KG**
**40699 Erkrath (DE)**

(72) Erfinder: **PÖTING, Klaus**
**D-40699 Erkrath (DE)**

(74) Vertreter: **Palgen, Peter, Dipl.-Phys. Dr. et al**
**Patentanwälte Palgen, Schumacher & Kluin,**
**Mulvanystrasse 2**
**40239 Düsseldorf (DE)**

(56) Entgegenhaltungen:
**DE-C- 308 109**          **FR-A- 2 549 817**
**GB-A- 564 304**          **GB-A- 1 137 471**
**US-A- 2 179 317**

**Beschreibung**

Die Erfindung bezieht sich auf ein Verfahren der dem Oberbegriff des Anspruchs 1 entsprechenden Art sowie auf eine für die Anwendung dieses Verfahrens besonders geeignete Vorrichtung gemäß dem Oberbegriff des Anspruchs 7. Zum Pressen von Glasformlingen finden im wesentlichen Verfahren Verwendung, bei denen unter einem konstanten Winkelabstand mehrere Preßformen auf einem drehbaren Maschinentisch angeordnet sind. Nachdem in diejenige unter einer Einrichtung zur Beschickung, dem sogenannten Feeder, befindliche Preßform schmelzflüssiges Glas in einer vorbestimmten Menge eingefüllt wurde, wird der Maschinentisch um den Winkelabstand zweier benachbarter Preßformen gedreht, so daß diejenige mit dem frisch eingefüllten, schmelzflüssigen Glas unterhalb eines Preßstempels positioniert wird. Der Preßstempel, welcher die innere Form des Glasformlings vorgibt, wird in die Preßform hinabgesenkt und preßt das schmelzflüssige Glas in die eigentliche äußere Form hinein. Während dieses Vorgangs wird in die benachbarte Preßform, die sich nun unter dem Feeder befindet, schmelzflüssiges Glas eingefüllt. Nach der für die vollständige Ausformung des Glasformlings minimal erforderliche Zeitdauer, die üblicherweise im Bereich von wenigen Sekunden liegt, wird der Preßstempel wieder aus der Preßform hinausgefahren und der Maschinendrehtisch wiederum einen dem Abstand zweier benachbarten Preßformen entsprechenden Winkel weitergedreht, und der Zyklus beginnt von vorne.

Der fertig gepreßte Glasformling verweilt solange in seiner Preßform, bis sich dieser durch Abgabe von Strahlungswärme und vor allem durch Wärmeabfuhr über die Preßform soweit abgekühlt hat, daß er zu einem formstabilen Körper erstarrt ist. Die hierfür benötigte Abkühlzeit liegt im allgemeinen erheblich oberhalb der für das vollständige Ausformen benötigten Preßzeit, so daß der Glasformling für die Dauer mehrerer Zyklen in der Preßform abgekühlt werden muß. Der Maschinendrehtisch muß daher mindestens eine Anzahl von Preßformen aufweisen, daß die für den Transport von der Preßstation zu einer Entnahmestation benötigte Zeit mindestens der erforderlichen Abkühldauer entspricht. Für die Abkühldauer $t_k$ gilt:

$$t_k = (z - 1) \, t_p + z t_T,$$

wobei z die Anzahl der Zyklen, $t_T$ die Preßdauer sowie $t_p$ die Zeit, die der Drehtisch zur Drehung um einem dem Abstand benachbarter Preßformen entsprechenden Winkelabstand benötigt, bedeuten. Die Leistungsfähigkeit eines derartigen Verfahrens hängt demnach nicht allein von der für die Ausformung des Glasformlings benötigten Mindestpreßdauer ab, sondern wird wesentlich durch die zum Abkühlen des Glasformlings bis zu seiner Erstarrung notwendigen Zeit begrenzt.

Es ist daher ein wesentlicher Nachteil des Verfahrens, daß auch durch einen Einsatz aufwendigerer, wirkungsvollerer Preßantriebe, die ein schnelleres Ausformen des Glasformlings bewirken, die Leistungsfähigkeit des Verfahrens nicht wesentlich erhöht werden kann, da der die Leistungsfähigkeit bestimmende Parameter die zur Abkühlung des Glasformlings bis zu seiner Erstarrung notwendige Zeit ist.

Diese Nachteile sucht ein der WO 96/00193 entnehmbares, jedoch nicht vorveröffentlichtes Verfahren und eine zur Anwendung dieses Verfahrens besonders geeignete Vorrichtung zu verbessern.

Bei dem Verfahren verweilt der Preßstempel nach dem eigentlichen Preßvorgang in Kontakt mit dem Glasformling in der Preßform. Dadurch findet zusätzlich zu der Wärme, die von der Außenseite des Glasformlings über die Preßform abgeführt wird, durch den Kontakt zu dem metallischen Preßstempel ein intensiver Wärmeübergang von der Innenseite des Glasformlings auf den Preßstempel statt. Der Preßstempel bewirkt also im Vergleich zu Verfahren der eingangs genannten Art, bei denen oft Kühlluft in das Innere des Glasformlings eingeblasen wird, eine erheblich wirksamere Kühlung der Innenseite des Glasformlings. Daher wird die Zeitspanne, die er in der Preßform verweilen muß, bis sich zumindest seine oberflächennahen Bereiche auf eine solche Temperatur abgekühlt haben, daß er eines zur Entnahme aus der Preßform und zur Übergabe an eine Kühlstation ausreichende Formsteifigkeit aufweist, insgesamt erheblich reduziert. Daher steht bei diesem Verfahren die Preßform bereits nach einer kürzeren Zeit einem erneuten Preßvorgang zur Verfügung. Da bei dem Verfahren gemäß der WO 96/00193 in mehreren Preßformen parallel mit einer entsprechenden Anzahl von Preßstempeln Glasformlinge gepreßt werden, ist die Leistungsfähigkeit dieser Vorrichtung gegenüber einer solchen mit Winkeltisch und derselben Anzahl von Preßformen erhöht.

Aus der FR 2 549 817 AI ist eine mehrere unabhängige Pressen umfassende Vorrichtung bekannt, bei welcher die Preßformen zwischen einer Füllstation, einer Preßstation und einer Abgabestation verlagert werden.

Nachteilig ist bei diesem bekannten Verfahren, daß das Einleiten einer für den Glasformling benötigten abgeteilten Menge an schmelzflüssigem Glas in einer separaten, der Preßstation vorgeschalteten Befüllstation erfolgt, wodurch einerseits der konstruktive Aufwand einer zur Anwendung dieser Verfahren geeigneten Vorrichtung durch die Ausbildung einer separaten Befüllstation erhöht wird und die für die Übergabe der Preßform aus der Befüllstation in die Preßstation benötigte Zeitspanne die nach diesem Verfahren maximal erreichbare Leistungsfähigkeit einschränkt.

Weiterhin ist aus der DE-PS 308 109 eine Glaspreßvorrichtung bekannt, bei der zum Beschicken und Entleeren der Preßform der Preßstempel um eine vertikale Achse seitlich verschwenkbar angeordnet ist.

Nachteilig bei dieser Glaspreßvorrichtung ist der große Platzbedarf, der ihre Verwendung beim benachbarten, zeitparallelen Erzeugen von Glasformlingen nicht zuläßt.

Es ist daher eine Aufgabe der Erfindung, ein Verfahren zu entwickeln, bei welchem diese Nachteile beseitigt sind, ohne daß es dazu eines wesentlich erhöhten maschinellen Aufwandes bedarf. Es ist eine weitere Aufgabe der Erfindung, eine Glaspreßvorrichtung zu schaffen, die insbesondere zur Durchführung dieses Verfahrens geeignet ist.

Diese Aufgaben werden durch das in Anspruch 1 wiedergegebene Verfahren und durch die in Anspruch 5 wiedergegebene Glaspreßvorrichtung gelöst.

Dadurch, daß die abgeteilte Menge des schmelzflüssigen Glases der in der Preßstation befindlichen Preßform vor dem Eintauchen des Preßstempels zugeführt wird, kann auf die bei herkömmlichen Verfahren oft vorhandene separate Befüllstation, welche der Preßstation - im Sinne des zeitlichen Ablaufs des Verfahrens - vorgeschaltet ist, verzichtet werden. Darüber hinaus kann auch der Glasformling der Preßform entnommen werden, während sich diese in der Preßstation befindet, wodurch die Notwendigkeit eines Formentransports entfällt. Durch diese Maßnahmen verringert sich nicht nur der konstruktive Aufwand bei einer zur Anwendung des erfindungsgemäßen Verfahrens geeigneten Vorrichtung beispielsweise durch Einsparung der bisher für die separate Befüllstation benötigten Preßform, sondern durch Einsparung der für die Übergabe des mit der abgeteilten Menge des schmelzflüssigen Glases gefüllten Preßform aus der Befüllstation an die Preßstation und gegebenenfalls die Übergabe der Preßform von der Preßstation an die Entnahmestation ist die Leistungsfähigkeit des erfindungsgemäßen Verfahrens gegenüber herkömmlichen Verfahren erhöht.

Der Preßstempel wird zum Einfüllen der abgeteilten Menge des schmelzflüssigen Glases aus seiner Ruhelage um eine Achse quer zur Längsachse des Preßstempels seitlich verschwenkt. Durch diese Maßnahme wird erreicht, daß der für den Einfüllvorgang des schmelzflüssigen Glases in der Preßstation zur Verfügung stehende Raum oberhalb der Öffnung der Preßform vergrößert wird, wodurch zum Einfüllen benötigte Einrichtungen auch voluminöserer Bauart problemlos über die Öffnung der Preßform gebracht werden können, ohne daß hierfür der seitliche Platzbedarf der Glaspreßvorrichtung wesentlich erhöht wäre. Daher kann auf die Verwendung besonders filigraner Einrichtungen zum Befüllen, die einen erhöhten konstruktiven Aufwand und eine höhere Störanfälligkeit bedeuten würden, verzichtet werden. Auch ist eine Entnahme des Glasformlings von oben bewerkstelligbar, ohne daß hierzu der Stempel zur Schaffung des benötigten Freiraums um einen großen Hub, der die erreichbare Leistungsfähigkeit des Verfahrens nachteilig beeinflussen würde, aus der Preßform herausgefahren werden muß. Auch ist es erst durch diese Ausgestaltung möglich, zeitparallel mehreren in der Preßstation befindlichen Preßformen die abgeteilte Menge an schmelzflüssigem Glas vor dem Eintauchen des Preßstempels zuzuführen und mit einer entsprechenden Anzahl von Preßstempeln aus schmelzflüssigem Glas Glasformlinge zu pressen. Die Erhöhung der Leistungsfähigkeit geht dabei nur mit einem relativ geringen konstruktiven Mehraufwand einher, der lediglich in den zusätzlich benötigten Preßstempeln, Preßformen und Einrichtungen zum Einfüllen der abgeteilten Menge des schmelzflüssigen Glases in die Preßform besteht.

Mit geringem konstruktiven Aufwand und besonders zuverlässig kann die abgeteilte Menge des schmelzflüssigen Glases nach dem Verschwenken des Preßstempels in die Preßform eingefüllt werden, wenn eine von dem sogenannten Feeder verbundene Zuführrinne aus einer das Eintauchen des Preßstempels in die Preßform ermöglichenden Ausgangslage in eine Position verschwenkt wird, in der das offene Ende der Zufuhrleitung mit der Öffnung der Preßform kommuniziert und nach Abschluß des Einfüllvorganges in ihre Ausgangslage zurückverschwenkt wird (Anspruch 2).

Eine Weiterbildung des erfindungsgemäßen Verfahrens für eine mögliche Anwendungsform ist Gegenstand des Anspruchs 3. Es werden hierbei zumindest in zwei Preßformen zeitparallel zu einem Bauteil zusammenfügbare Teilformlinge - beispielsweise zwei Hälften eines Glasbausteins - gepreßt. Nachdem sich die Teilformlinge zumindest in ihren oberflächennahen Bereichen auf eine solche Temperatur abgekühlt haben, die eine Entnahme derselben aus den Preßformen erlaubt, werden sie mit Hilfe einer an sich bekannten Vorrichtung entnommen und direkt einer ebenfalls an sich bekannten Vorrichtung zum Zusammenfügen der Teilformlinge übergeben. Da für den Übergabevorgang nur eine relativ kurze Zeit benötigt wird, kann der in den Hälften gespeicherte Wärmeinhalt für den Zusammenfügeprozeß ausgenutzt werden. Die zum erneuten Aufheizen der an der Nahtstelle aneinandergrenzenden Flächen der Teilformlinge benötigte Energiemenge kann daher gegenüber herkömmlichen Verfahren erheblich gesenkt werden.

Bei einer anderen vorteilhaften Weiterbildung des Verfahrens umfaßt eine Preßstation eine Sequenz von verschiedenen Preßformen und Preßstempeln, die der schrittweisen Ausformung eines Glasformlings dienen. Dazu werden in den verschiedenen Preßformen zeitgleich unterschiedliche Teile des Preßformlings gepreßt, wobei die Preßformen derart ausgestaltet sind, daß jeweils - mit Ausnahme der in der Sequenz ersten Preßform - ein in einem der vorigen Zyklen hergestelltes, an das auszuformende angrenzendes Teilstück in die Preßform einsetzbar ist, so daß bei dem Preßvorgang zugleich die Ausformung des weiteren Teils des Glasformlings und die Verbindung mit dem daran angrenzenden Teil bewirkt wird (Anspruch 4). Das in die Preßform eingesetzte Teilstück muß allerdings nicht zwingend in derselben Sequenz hergestellt werden sein, sondern kann auch aus einer anderen, beispielsweise einer Blasmaschine stammen.

Eine insbesondere zur Anwendung des erfindungsgemäßen Verfahrens geeignete Glaspreßvorrichtung ist Gegenstand des Anspruchs 5. Es ist jedoch ebenfalls möglich, diese Glaspreßvorrichtung bei der Anwendung herkömmlicher Verfahren vorteilhaft einzusetzen. Da der Preßstempel aus seiner außerhalb der Preßform befindlichen Ruhelage seitlich - bezogen auf die Preßrichtung - verschwenkbar ist, ist eine in der Preßstation befindliche Preßform leicht zugänglich, ohne daß es dazu der Demontage des Preßstempels bedarf. Hierdurch können erforderlichenfalls Manipulationen an der Preßform unter einem im Vergleich zu herkömmlichen Glaspreßvorrichtungen geringerem Arbeitsaufwand durchgeführt werden. Des weiteren ist nach dem Verschwenken des Preßstempels die Öffnung der Preßform leichter zugänglich, wodurch die abgeteilte Menge des schmelzflüssigen Glases der in der Preßstation befindlichen Preßform auch mit relativ voluminösen Einfülleinrichtungen zugeführt werden kann. Zwar wäre es prinzipiell auch möglich, den Freiraum oberhalb der Preßform durch einen besonders langen Hub des Preßstempels zu vergrößern, diese Maßnahme würde aber einhergehen mit größeren Vorrichtungsdimensionen und mit einer durch die zur Durchführung einer langen Hubbewegung benötigten Zeit verringerten Leistungsfähigkeit der Vorrichtung.

Von dem Feeder wird die abgeteilte Menge des für den Glasformling benötigten schmelzflüssigen Glases vorzugsweise mit Hilfe einer Zuführrinne der Preßform zugeführt, welche bei seitlich verschwenktem Preßstempel in eine Position verlagerbar ist, in der ihr Ende mit der Öffnung der Preßform kommuniziert (Anspruch 6).

Hinsichtlich einer verzögerungsfreien, präzisen und wartungsarmen Kraftübertragung von dem Krafterzeuger auf den Preßstempel ist es gemäß Anspruch 7 besonders vorteilhaft, wenn die Glaspreßvorrichtung eine in ihrer Achsrichtung verschiebbar geführte Preßstange umfaßt, die mit ihrem einen Ende mit dem Krafterzeuger zusammenwirkt und deren anderes Ende den Preßstempel betätigt.

Bei einer ersten bevorzugten Ausführungsform der Glaspreßvorrichtung wird die Verschwenkbarkeit des Preßstempels konstruktiv dadurch erzielt, daß gemäß Anspruch 8 an dem Gestell der Vorrichtung ein um eine zur Preßrichtung querverlaufende Schwenkachse schwenkbarer Ausleger angebracht ist, der eine Schienenanordnung umfaßt, auf welcher der Preßstempel mittels eines Schlittens gelagert ist. Der Schlitten erlaubt dabei das Hineindrücken des Preßstempels in die Preßform zur Ausführung des eigentlichen Preßvorganges.

Vorzugsweise stützt sich gemäß Anspruch 9 der Ausleger über eine senkrecht zur Schwenkachse wirkende, längenvariable Schwenkeinrichtung an dem Gestell ab, so daß der Preßstempel mit Hilfe der Schwenkeinrichtung sowohl um die Schwenkachse verschwenkt, als auch in der jeweils gewünschten Winkellage fixierbar ist.

Eine besonders bevorzugte Ausgestaltung der längenvariablen Schwenkeinrichtung, bei der diese eine mit einem gelenkig an dem Ausleger angebrachte und in ihrer Achsrichtung verschiebbar geführte Schwenkstange umfaßt, die unter Federkraft mit ihrem anderen Ende an einer elektromotorisch angetriebenen Kurvenscheibe anliegt, ist Gegenstand des Anspruchs 10.

Die Verbindung der Preßstange mit dem Preßstempel erfolgt bei dieser ersten bevorzugten Ausführungsform der Glaspreßmaschine vorzugsweise über ein Kniegelenk, welches eine zur Schwenkachse parallele Gelenkachse aufweist (Anspruch 11).

Für eine besonders effektive Kraftübertragung von dem Krafterzeuger auf den Preßstempel und damit zur Erzielung hoher Preßdrucke ist es von Vorteil, die Preßstange gemäß Anspruch 12 derart anzuordnen, daß ihre Mittelachse während des Preßvorganges mit der Mittelachse des Preßstempels fluchtend verläuft.

Die zum Einfüllen der abgeteilten Menge schmelzflüssigen Glases in die Preßform benötigte Zeitdauer wird minimiert, wenn beim Verschwenken des Preßstempels aus seiner Ruhelage zugleich die Zuführrinne in ihre Einfüllposition verlagert wird. Eine dazu geeignete, konstruktiv besonders einfache Maßnahme ist Gegenstand des Anspruchs 13.

Der Zugang einer Preßform, die Entnahme eines Glasformlings aus der Preßform und der Abtransport des Glasformlings wird erleichtert, wenn der Preßstempel aus seiner Ausgangslage in Richtung der geschlossenen Seite des Vorrichtungsgestells verschwenkbar ist (Anspruch 14).

Eine zweite bevorzugte Ausführungsform der Glaspreßvorrichtung, die insbesondere für Glasformlinge geeignete ist, zu deren Herstellung lediglich geringere Preßkräfte erforderlich sind, ist Gegenstand der Ansprüche 15 bis 17. Bei dieser Glaspreßvorrichtung ist an dem Gestell eine Schienenanordnung vorgesehen, auf welcher eine in Preßrichtung verlagerbare Schlittenanordnung vorgesehen ist. Diese trägt einen von der geschlossenen Seite des Gestells während des Preßvorganges vorkragenden Halter, an dem der Preßstempel befestigt ist. Da der Halter bei außerhalb der Preßform befindlichem Preßstempel zur geschlossenen Seite des Gestells um eine im Bereich der Schlittenanordnung liegende Achse zurückverschwenkbar ist, ist wegen des relativ geringen Abstandes zwischen der Schwenkachse und dem Preßstempel zur Erzielung des oberhalb der Preßform gewünschten Freiraumes lediglich eine relativ kurze Bewegung erforderlich, wodurch die Taktfrequenz und damit die Leistungsfähigkeit der Glaspreßvorrichtung abermals erhöht werden kann.

Weist der Halter die Merkmale des Anspruchs 16 auf, so reichen bereits Verschwenkwinkel von in der Größenordnung 90° aus, um die offene Seite der Preßform vollständig freizugeben.

Um die gewünschte Verschwenkbarkeit des den Preßstempel tragenden Halters zu gewährleisten, ist es bei dieser bevorzugten Ausführungsform der Glaspreßvorrichtung von Vorteil, wenn gemäß Anspruch 17 das den Preßstempel betätigende Ende der Preßstange mit der Schlittenanordnung verbunden ist. Die mit dem Preßstempel aufbringbare Preßkraft ist dann allerdings begrenzt, da sie von dem Halter auf den Preßstempel übertragen werden muß.

Bei einer besonders bevorzugten Ausführungsform gemäß Anspruch 18 besteht der Krafterzeuger aus einer von einem drehmoment- und drehzahlsteuerbaren Elektromotor angetriebenen Kurvenscheibe. Diese Ausgestaltung ermöglicht einerseits das Hineindrücken des Preßstempels besonders schnell und mit hoher Präzision, andererseits zeichnet sich dieser Krafterzeuger durch einen geringen erforderlichen Wartungsaufwand und eine kostengünstige Herstellbarkeit aus. Auch ist die Geräuschbelästigung während seines Betriebes gering.

Da der die Kurvenscheibe antreibende Elektromotor drehmoment- und drehzahlsteuerbar ist, können sowohl der Vorschub, mit welchem der Preßstempel in die Preßform hineingedrückt wird, als auch die auf den Glasformling während des Preßvorganges ausgeübte Kraft auf einfache Weise den jeweiligen durch den Glasformling vorgegebenen Anforderungen angepaßt werden. Dabei kann - falls erforderlich - durch Variation des Stromes, mit dem der Elektromotor beaufschlagt wird, ein "Preßkraftprogramm" gefahren werden, d.h. die Preßkraft kann während des Preßvorganges variiert werden. Durch die Wahl einer entsprechenden Kurvenscheibenform kann der Geschwindigkeitsverlauf des Vorschubes während des Preßstempelabsenkens mechanisch vorgewählt werden, so daß auch dieser an individuelle, durch den jeweiligen Glasformling bzw. durch das verwendete Glasmaterial vorgegebene Anforderungen anpaßbar ist.

Bei einer bevorzugten Ausführungsform gemäß Anspruch 19 ist der Elektromotor ein Drehstrom-Servomotor, da dieser eine besonders feinfühlige Steuerung seiner Drehzahl und des von ihm erzeugten Drehmoments erlaubt. Eine präzise Rückführbarkeit des Preßstempels aus der Preßform ist gewährleistet, wenn gemäß Anspruch 20 zum Zurückziehen des Preßstempels eine Gegenkurvenscheibe Verwendung findet.

Versuche haben gezeigt, daß besonders gute Preßergebnisse erzielt werden, wenn die Einrichtung zum Zurückziehen des Preßstempels ein in die Preßstange entgegen der Preßeinrichtung kraftbeaufschlagendes elastisches Element ist (Anspruch 21).

Es ist jedoch ebenfalls möglich, das Zurückziehen des Stempels mit Hilfe eines hydraulisch oder pneumatisch betriebenen Zylinders oder eines Gegengewichts zu bewerkstelligen.

Wartungsarm und preisgünstig in seiner Herstellung ist das elastische Element dann, wenn es gemäß Anspruch 22 mindestens eine Schraubenfeder umfaßt.

Eine mögliche bevorzugte Anwendungsform einer solchen Vorrichtung sieht vor, die Preßformen und Preßstempel derart auszubilden, daß bei einem Preßvorgang zu einem Bauteil zusammenfügbare Teilformlinge ausgeformt werden (Anspruch 23). Es ist dann gemäß Anspruch 24 weiterhin von Vorteil, eine Einrichtung zur Entnahme der Teilformlinge aus den Preßformen und zur Übergabe an eine Vorrichtung zum Zusammenfügen der Teilformlinge vorzusehen. Durch diese Maßnahme ist es möglich, die Teilformlinge innerhalb kürzester Zeit, nachdem sie sich zumindest in ihren oberflächennahen Bereichen auf eine Temperatur abgekühlt haben, daß sie die zur Entnahme und zum Transport erforderliche Steifigkeit aufweisen, der Vorrichtung zum Zusammenfügen zu übergeben. Wegen der großen, zu diesem Zeitpunkt in den Teilformlingen noch gespeicherten Wärmemenge ist der Energiebedarf zum Zusammenfügen der Teilformlinge gegenüber herkömmlichen Verfahren, bei denen zwischen dem Auspressen und dem Zusammenfügen relativ lange Zeiten verstreichen, erheblich reduziert.

Eine für eine weitere vorteilhafte Anwendung geeignete Ausführungsform einer mit mehreren Preßformen und einer entsprechenden Anzahl von Preßstempeln ausgestatteten Glaspreßvorrichtung ist Gegenstand des Anspruchs 25. Bei dieser Vorrichtung ist eine Sequenz von Preßformen und Preßstempeln vorgesehen, die der schrittweisen Ausformung des Glasformlings dienen.

Besonders vorteilhaft ist es gemäß Anspruch 26, wenn die Sequenz Preßformen und Preßstempel umfaßt, mit denen bei einem Preßvorgang verschiedene, insgesamt den vollständigen Glasformling ergebende Teile desselben preßbar sind.

Weisen die Preßformen die Merkmale des Anspruchs 27 auf, so entfällt ein nachträgliches Zusammenfügen der einzelnen Teile des Glasformlings, so daß durch diese Maßnahme weitere Arbeitsschritte eingespart werden können.

In der Zeichnung ist das erfindungsgemäße Verfahren sowie eine insbesondere zur Anwendung des erfindungsgemäßen Verfahrens geeignete Glaspreßvorrichtung schematisch dargestellt. Es zeigen:

Fig. 1 eine Darstellung des erfindungsgemäßen Verfahrens mit einem linearen Achtformentisch und acht Preßstempeln;

Fig. 2 eine Ausführungsform der erfindungsgemäßen, zur Anwendung des Verfahrens besonders geeigneten Glaspreßvorrichtung in einer Seitenansicht während des Einfüllens der abgeteilten Menge des schmelzflüssigen Glases bei verschwenktem Preßstempel;

Fig. 3 - ausschnittsweise - die in der Glaspreßvorrichtung gemäß Fig. 3 vorgesehene Preßform (Einzelheit A in Fig. 3);

Fig. 4 eine mögliche Ausgestaltung einer Kühlform zur gezielten Abkühlung und Abstützung des Glasformlings nach dem Preßvorgang;

Fig. 5 - schematisch - den Aufbau einer Vorrichtung zur Herstellung eines aus zwei Hälften bestehenden Bauteils;

Fig. 6a bis 6g eine Darstellung von Schritten des Entnahme- und Zusammenfügevorgangs der beiden Hälften bei einer Vorrichtung gemäß Fig. 5;

Fig. 7a bis 7d die Herstellungsschritte bei einer Vorrichtung, bei welcher der Glasformling in zwei aufeinanderfolgenden Preßvorgängen ausgeformt wird sowie

Fig. 8 eine weitere, bevorzugte Ausgestaltung eines verschwenkbar gelagerten Preßstempels.

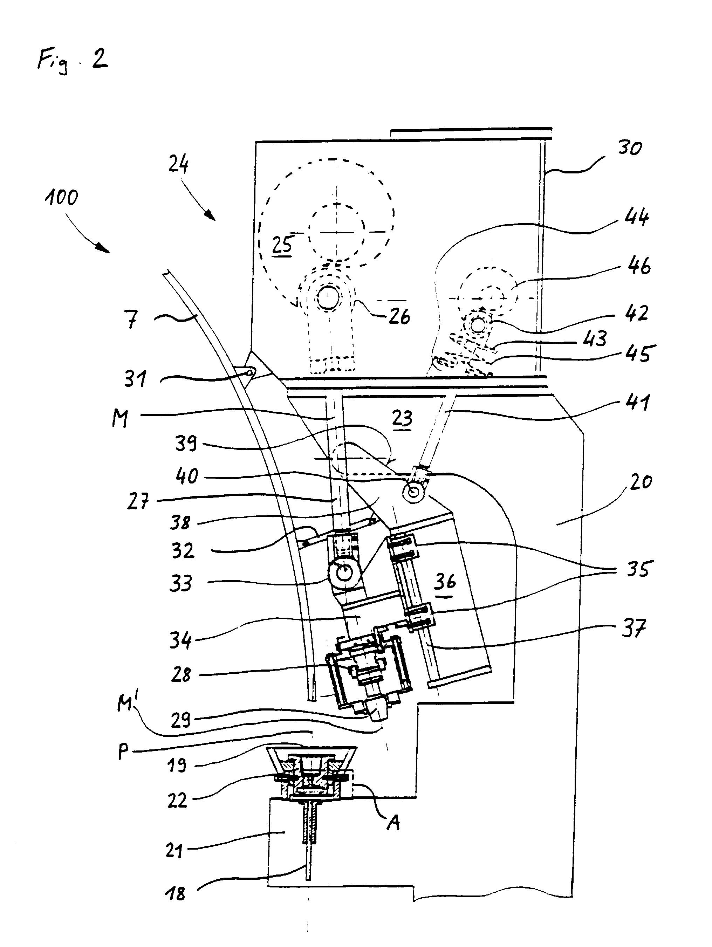

Wenn im folgenden von "oben" bzw. "unten" die Rede ist, so beziehen sich die Angaben auf die in Fig. 2 bis 8 dargestellten aufrechten Betriebsweisen der jeweils dargestellten Glaspreßvorrichtung.

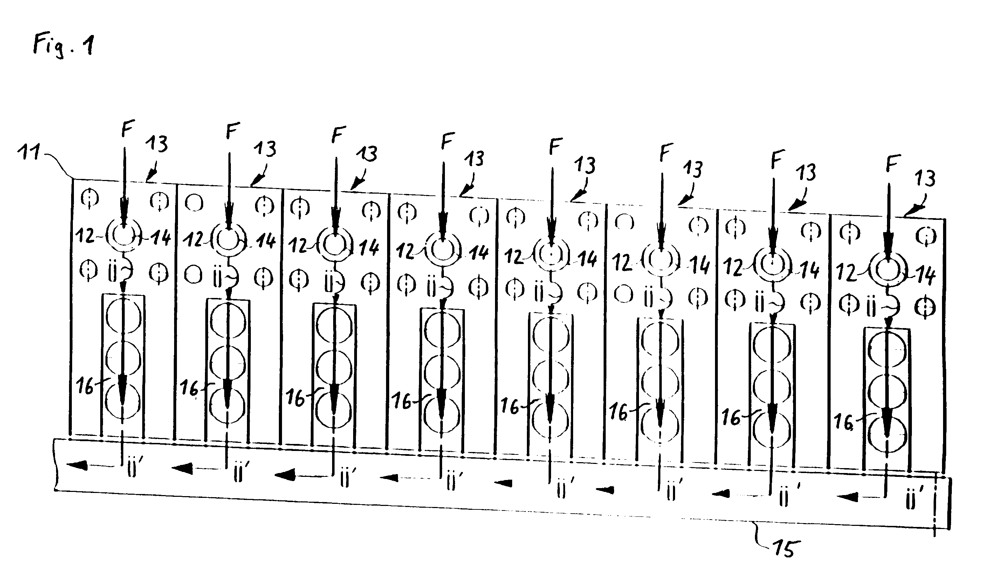

In Fig. 2 ist der Ablauf des erfindungsgemäßen Verfahrens am Beispiel einer Vorrichtung erläutert, welche einen linearen, acht Preßformen 12 aufweisenden Maschinentisch 11 sowie eine acht Preßstempel 14 umfassende Glaspreßvorrichtung 13 aufweist. Zur Herstellung eines Glasformlings wird zunächst mit Hilfe eines mit einer in der Figur nicht dargestellten schwenkbaren Zuführrinne ausgerüsteten Feeders eine abgeteilte Menge schmelzflüssigen Glases in die jeweilige, in der Preßstation befindliche Preßform eingegeben. Dieser Einfüllvorgang, bei dem von dem Feeder nacheinander entsprechende Glasmengen in zu der jeweiligen Preßform führende Zuführrinnen abgegeben werden, ist in Fig. 1 durch den mit F bezeichneten Pfeil symbolisiert. Bei dieser Vorrichtung findet das Einfüllen F der abgeteilten Menge des schmelzflüssigen Glases in der anhand Fig. 1 beschriebenen Weise statt. Es ist jedoch ebenfalls möglich, die abgeteilte Menge schmelzflüssigen Glases zeitgleich in die in der Preßstation befindlichen Preßformen 12 einzufüllen, wenn für jede Zuführrinne und dementsprechend für jede Preßform ein eigener Speiser vorgesehen ist.

Nach Beendigung des Einfüllvorganges und dem Zurückschwenken der Zuführrinnen und der Preßstempel 14 werden diese zeitgleich in die Preßformen 12 hineingedrückt und solange in Kontakt mit dem Glasformling belassen, bis sich dieser zumindest in seinen oberflächennahen Bereichen auf eine solche Temperatur abgekühlt hat, daß er zur Entnahme aus der Preßform und zur Übergabe an eine Kühlstation ausreichende Formsteifigkeit aufweist. Anschließend findet die Übergabe Ü des Preßformlings an eine Kühlstation 16 statt, welche aus einem Kaltluftgebläse bestehen oder die Temperatur des Glasformlings weiter absenkende und vergleichmäßigende Kühlformen, die in der Zeichnung nicht dargestellt sind, umfassen kann. In der Kühlstation wird der Glasformling bis zu seinem vollständigen Erstarren abgekühlt. Er wird dann in einem weiteren Übergabeschritt Ü' einem Transportband 15 übergeben.

Es ist im Bedarfsfall selbstverständlich ebenfalls möglich, auf nachgeschaltete Kühlformen zu verzichten und statt dessen die Verweilzeit des Preßstempels in dem Glasformling so zu bemessen, daß dieser in der Preßform vollständig erstarrt.

Anhand von Fig. 2 soll nun im Folgenden eine für die Anwendung des erfindungsgemäßen Verfahrens besonders geeignete Glaspreßvorrichtung erläutert werden.

Die Glaspreßvorrichtung 100 umfaßt ein Gestell 20, von welchem ein Pressentisch 21 vorspringt, dessen Oberfläche in einer horizontalen Ebene liegt. Der Pressentisch 21 trägt auf seiner Oberseite eine Preßform 22. Diese ist mit einem Heraushebeelement 18 ausgerüstet, mittels welchem ein in der Preßform 22 befindlicher Glasformling 9 - gegebenenfalls nach dem Trennen der Teilformen bei einer vertikal geteilten Preßform - aus derselben zur Übergabe an nachgeschaltete Bearbeitungsstationen heraushebbar ist. Oberhalb des Pressentisches 21 mündet das Gestell 20 in einen feststehenden Ausleger 23, welcher auf seiner Oberseite den Pressenantrieb 24 trägt.

Der Pressenantrieb 24 umfaßt eine von einem in der Zeichnung nicht dargestellten Drehstrom-Servomotor angetriebene Kurvenscheibe 25, welche auf eine Rolle 26 wirkt, die am oberen Ende einer in dem Ausleger 23 in Richtung ihrer Längsachse verschiebbar und um die Achse der Rolle 26 verschwenkbar gelagerten Preßstange 27 angebracht ist.

Die Preßstange 27 ist über ein Kniegelenk 33, dessen Gelenkachse parallel zur Achse der Rolle 26 verläuft, mit einem Halter 34 verbunden, welcher an seinem unteren Ende den mit Hilfe einer Schnellbefestigungseinrichtung 28 montierten Preßstempel 29 trägt. Der Halter 34 umfaßt auf seiner dem Gestell 20 zugewandten Seite eine Schlittenanordnung 35, welche auf einer mit einem an dem Ausleger 23 um eine horizontale Achse schwenkbar gelagerten Ausleger 36 angeordneten Schienenanordnung 37 gelagert ist. Die Schienenanordnung ist derart konzipiert, daß im Falle einer vertikalen Ausrichtung der Halter 34 derart verlagerbar ist, daß der an der Unterseite des Halters 34 montierte Preßstempel 29 in die Preßform 22 hineingedrückt werden kann.

Oberhalb der Schienenanordnung 37 weist der Halter 34 einen schräg von der Seite des Gestells 20 nach oben ausgerichteten Trägerarm 38 auf, welcher über ein nicht näher dargestelltes Lager die schwenkbare Verbindung des Auslegers 36 mit dem feststehenden Ausleger 23 des Gestells 20 herstellt.

Von seiner dem Gestell 20 zugewandten Seite 39 erstreckt sich eine über eine gelenkige Verbindung 40 mit diesem verbundene Schwenkstange 41 schräg nach oben, die am oberen Ende eine Rolle 42 trägt. Unterhalb der Rolle 42 ist an der Schwenkstange 41 ein Federteller 43 angebracht, an welchem sich eine mit ihrem anderen Ende in einem an dem Ausleger 23 vorgesehenen Sitz 44 ruhende, auf Druck beanspruchte Schraubenfeder 45 abstützt.

Den Anschlag für die unter Federkraft stehende Schwenkstange bildet eine Kurvenscheibe 46, welche durch einen in der Zeichnung nicht dargestellten Drehstrom-Servomotor angetrieben wird. Die Exzentrizität der Kurvenscheibe und die Länge der Schwenkstange 41 sind gerade so bemessen, daß der Ausleger 36 zwischen einer zurückverschwenkten Winkellage, in der der Preßstempel 29 die Öffnung 19 der Preßform 22 freigibt, und einer Position, in der die Schienenanordnung 35 in vertikaler Richtung verläuft und die Mittelachsen M , M' der Preßstange 27 bzw. des Preßstempels 29 mit der vertikalen Preßachse P, entlang welcher der Preßstempel 29 in die Preßform 22 hingedrückt wird, zusammenfallen, verschwenkbar ist.

Außer durch eine Kurvenscheibe kann der Antrieb der Schwenkstange selbstverständlich auch durch andere Mittel, wie beispielsweise hydraulische oder pneumatische Kolben/Zylindereinheiten, erfolgen.

Die bei der dargestellten Glaspreßvorrichtung 100 vorgesehene Zufuhrleitung 7 ist in der gleichen Richtung wie der Preßstempel 29 verschwenkbar an einem den Pressenantrieb abdeckenden Gehäuse 30 mittels eines Scharniergelenks 31 gelenkig gehalten. An einer von dem Scharniergelenk 31 beabstandeten Stelle ist die Zufuhrleitung 7 weiterhin über eine Betätigungsstange 32 gelenkig mit dem Trägerarm 36 verbunden, deren Länge so bemessen ist, daß das Ende 8 der Zufuhrleitung 7 bei verschwenktem Preßstempel 29 mit der Preßform 22 kommuniziert.

Im Folgenden soll kurz die Funktionsweise dieser Glaspreßvorrichtung beschrieben werden.

Bei der Glaspreßvorrichtung 100, die in Fig. 2 in einem Betriebszustand vor dem Pressen des Glasformlings dargestellt ist, wie er besonders zum Befüllen der Preßform 22 mit der abgeteilten Menge des schmelzflüssigen Glases geeignet ist, wird zunächst durch Drehung der Kurvenscheibe 46 im Uhrzeigersinn die Schwenkstange 41 schräg nach unten verlagert, wodurch der die Schienenanordnung 37 tragender Ausleger 36 soweit im Uhrzeigersinn verschwenkt wird, bis die Schienenanordnung 37 vertikal verläuft. Wie bereits erläutert, fallen in dieser Position die Mittelachsen M, M' der Preßstange 27 und des Preßstempels 29 mit der Preßachse P zusammen. Durch stoppen der Drehung der Kurvenscheibe 46 wird der Ausleger 36 in dieser Lage für die Dauer des Preßvorganges positioniert, der durch eine Drehung im Uhrzeigersinn der Kurvenscheibe 25 mit Hilfe eines ebenfalls nicht dargestellten Drehstrom-Servomotors eingeleitet wird. Durch die Exzentrizität der Kurvenscheibe 25 wird die Preßstange 27 nach unten verlagert und drückt dabei den Preßstempel 29 soweit in die Preßform 22, bis zwischen der inneren Oberfläche der Preßform 22 und der äußeren Oberfläche des Preßstempels 29 ein in der gewünschten Wandstärke des Glasformlings entsprechender Zwischenraum verbleibt.

Nach dem Abschluß des Preßvorganges erfolgt das Zurückziehen des Preßstempels 29 aus der Preßform 22 nach dem Weiterdrehen der Kurvenscheibe 25 in ihre Ausgangslage durch eine in der Zeichnung nicht dargestellte Einrichtung. Diese kann, wie bereits erwähnt, aus einem elastischen Element, einem Gegengewicht, einem hydraulisch oder pneumatisch angetriebenen Zylinder oder aus einer Gegenkurvenscheibe bestehen.

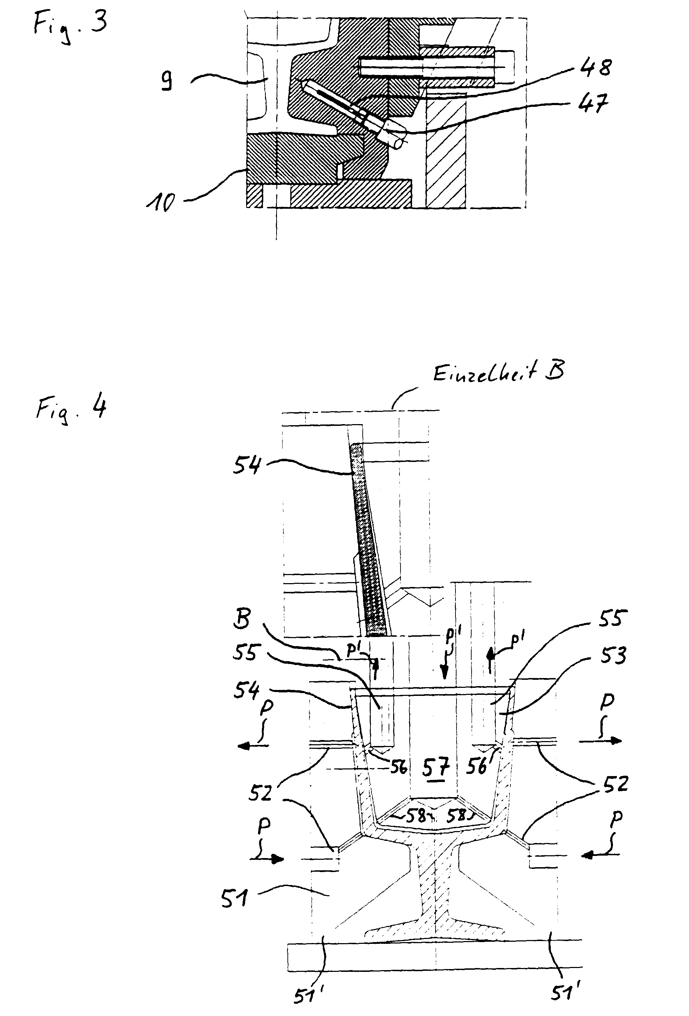

Da der Formenboden 10 bereits mit der Zugabe der abgeteilten Menge des schmelzflüssigen Glases aufgeheizt und durch eine Außenkühlung praktisch nicht erreichbar ist, kann sich - je nach Gestalt des auszupressenden Glasformlings - die Notwendigkeit einer intensiven Kühlung beispielsweise mit einem Wasserkreislauf ergeben. Eine mögliche Ausgestaltung zu diesem Zwecke ist in Fig. 3 dargestellt. Bei dieser Preßform ist in dem den unteren Bereich des Glasformlings ausbildenden Teil eine Bohrung 47 eingearbeitet, in welche eine Wassereinspritzdüse 48 mit Wasserrückführung über ein doppelwandiges Rohr eingesetzt ist. Bei der dargestellten Preßform 29, die der Ausbildung eines Stielglases dient, bewirkt die Wassereinspritzdüse 48 eine intensive Kühlung sowohl des Bodens 10 der Preßform als auch des während des Preßvorganges nicht unmittelbar mit dem Preßstempel 29 in Kontakt befindlichen Stielbereichs des Glasformlings 9. Selbstverständlich ist es im Bedarfsfalle weiterhin möglich, den Formenboden 10 durch eine weitere, separate Wasserkühlung zusätzlich gezielt zu kühlen.

Wie bereits erläutert, kann die Leistungsfähigkeit einer erfindungsgemäßen Glaspreßmaschine insbesondere dadurch erhöht werden, daß die Glasformlinge bereits aus der Preßform herausgehoben werden, wenn sich lediglich die oberflächennahen Bereiche auf eine eine ausreichende Steifigkeit des Glasformlings bewirkende Temperatur abgekühlt haben. Eine derart frühe Entnahme macht jedoch die Übergabe des Glasformlings 9 an eine nachgeschaltete Kühlstation 50 notwendig, von der eine mögliche Ausführungsform in Fig. 4 dargestellt ist.

Die Kühlform 50 umfaßt einen äußeren Teil 51, welcher derart gestaltet ist, daß der Glasformling an den erforderlichen Stellen gegen eine Verformung abgestützt wird. In den äußeren Teil 51 der Kühlform 50 sind Kühlkanäle 52 eingearbeitet, welche der durch die Pfeile P symbolisierte Zufuhr bzw. Abfuhr von Kühlluft dienen.

In den Hohlraum des Glasformlings 9 ist ein innerer Teil 53 der Kühlform 50 eingesetzt, welcher gleichzeitig - wie in Fig. 4 dargestellt - als Herausnehmerelement zur Herausnahme des Glasformlings nach seiner vollständigen Erstarrung aus der Kühlform dienen kann. Der innere Teil 53 der Kühlform 50 ist derart gestaltet, daß einerseits der Glasformling an den notwendigen Stellen gegen Verformungen abgestützt wird, andererseits den Glasformling derart umschließt, daß empfindliche Teile - im dargestellten Ausführungsbeispiel der obere Rand 54 des ausgeformten Stielglases - nicht direkt von Kühlluft angeströmt werden, um somit Spannungen und eventuelle Rißbildungen zu vermeiden. Gegebenenfalls ist es auch möglich, ein zu schnelles Abkühlen der besonders empfindlichen Bereiche des Glasformlings durch zusätzliche, in den äußeren und/oder in den inneren Teil der Kühlform 50 integrierte Heizvorrichtungen zu verhindern.

Wie bereits erwähnt, kann der innere Teil 53 der Kühlform 50 gleichzeitig als Herausnehmerelement dienen. Dazu wird über die zwei dezentral angeordneten Absaugbohrungen 55 ein derartiger, durch die Pfeile P' symbolisierter Luftstrom erzeugt, daß über die Kanäle 56 in einem im unteren Bereich zwischen dem inneren Teil 53 und dem Glasformling 9 bestehenden Freiraum ein derartiger Unterdruck der über die zentrale Zuströmbohrung 57 und die anschließenden Kanäle 58 zuströmenden Luft bewirkt wird, der ein Herausheben des Glasformlings 9 - im dargestellten Ausführungsbeispiel nach Separieren der beiden Hälften 51,51' des äußeren Teils 51 der Kühlform 50 - erlaubt. Befindet sich der Glasformling 9 in der Kühlform 50, so kann gegebenenfalls die Kühlung dadurch intensiviert werden, daß durch die Zuströmbohrung 57 und die anschließenden Kanäle 58 unter Überdruck stehende Kühlluft dem zwischen dem Glasformling 9 und dem inneren Teil 53 befindlichen Freiraum zugeführt wird.

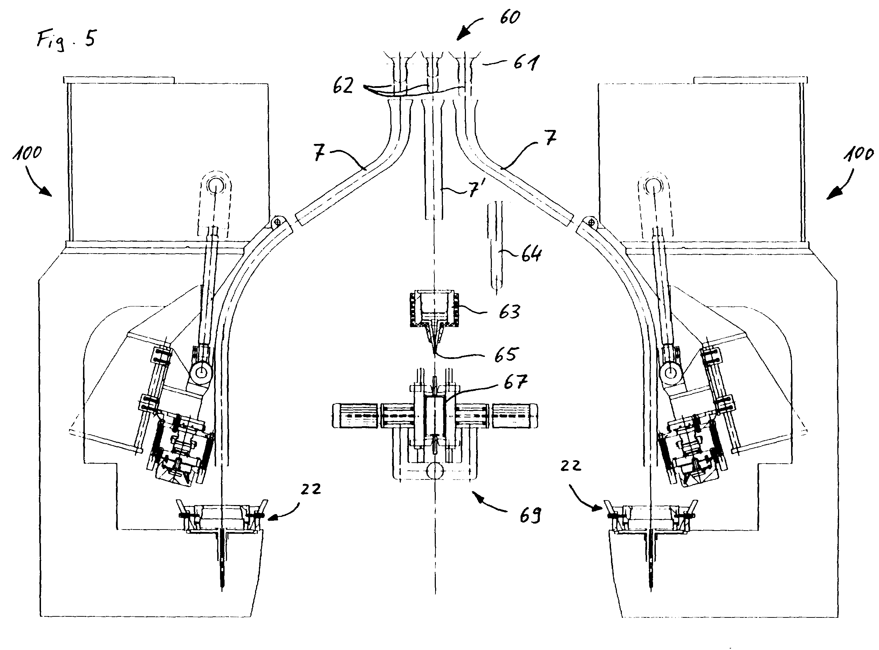

In Fig. 5 ist eine Anordnung dargestellt, bei der zwei einander gegenüberstehende erfindungsgemäßen Glaspreßvorrichtungen 100 der Fertigung zweier anschließend zu einem Bauteil zusammenzufügender Hälften dienen. Es sei erwähnt, daß die Anordnung der beiden Glaspreßvorrichtungen 100 nicht zwangsläufig einander gegenüberstehend, sondern auch in einer beliebigen anderen räumlichen Anordnung erfolgen kann und daß es auch denkbar ist, weitere Glaspreßvorrichtungen 100 in der im Folgenden beschriebenen Weise zusammenwirken zu lassen, wenn ein Bauteil aus mehreren Teilen zusammenzusetzen ist.

Bei der in Fig. 5 dargestellten Anordnung werden aus einem Feeder gleichzeitig drei durch eine Schere 61 abgeteilte Mengen 62 Zufuhrleitungen 7,7' zugeteilt. Die gleichgroßen, an die Zufuhrleitungen 7 abgegebenen Glasmengen werden in bereits beschriebener Weise Preßformen 29 zugeleitet, in welchen das Ausformen der Hälften jeweils durch das Hineindrücken des Preßstempels erfolgt, nachdem dieser aus seiner in Fig. 5 dargestellten seitlich verschwenkten Position zurückverschwenkt wurde. Auf die Darstellung der Einrichtung zum Verschwenken des Preßstempels, die beispielsweise wie in dem in Fig. 2 gezeigten Ausführungsbeispiel einer erfindungsgemäßen Glaspreßvorrichtung technisch realisiert werden kann, wurde aus Gründen der Übersicht verzichtet.

Die dritte, abgeteilte Menge an schmelzflüssigem Glas wird einer Injektionsform 63 zugeleitet und in dieser - beispielsweise nach Verschluß durch einen Deckel 64 und Einblasen von Druckluft in die Injektionsform - durch Auspressen aus einer Düse 65 zu einem Glasstrang geformt. Dieser Glasstrang dient - wie im Folgenden noch beschrieben werden wird, dem Zusammenfügen zweier zeitgleich hergestellter Hälften 66 zu einem Bauteil 67.

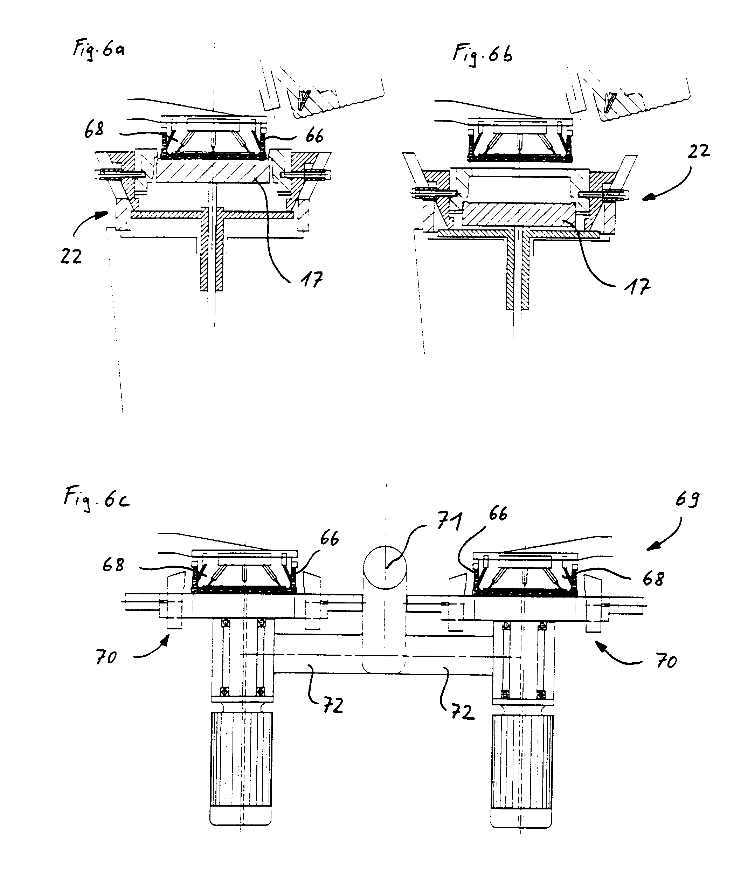

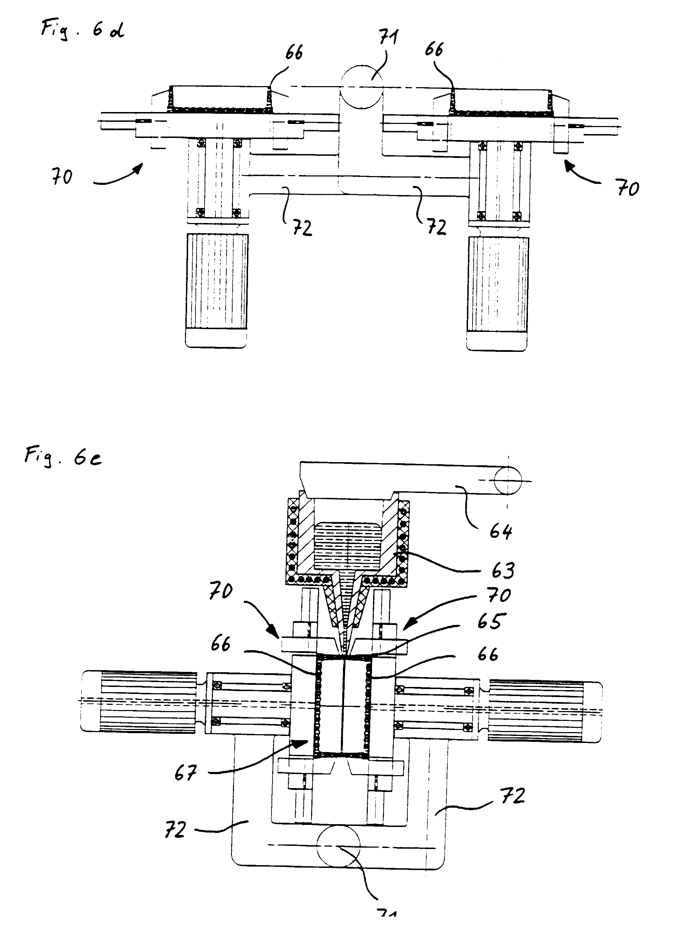

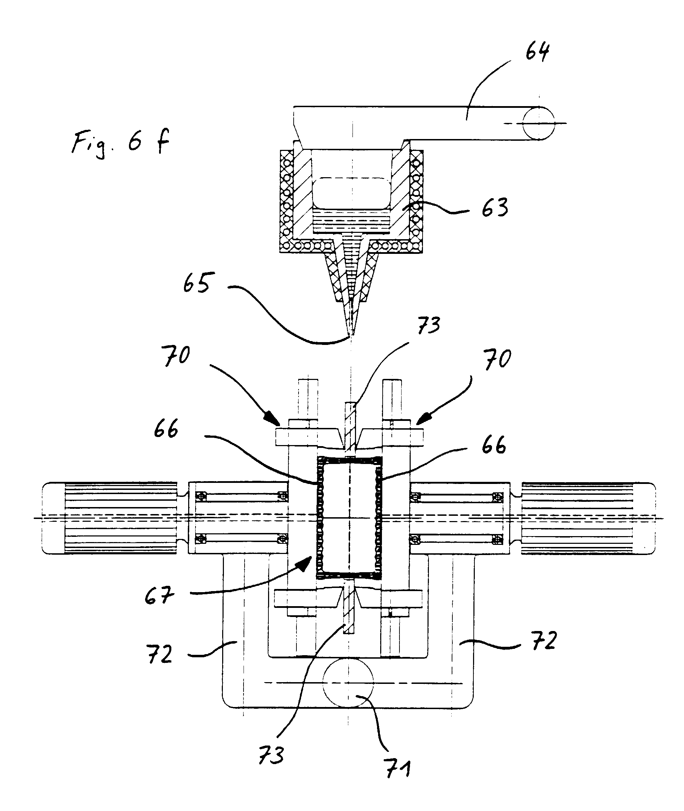

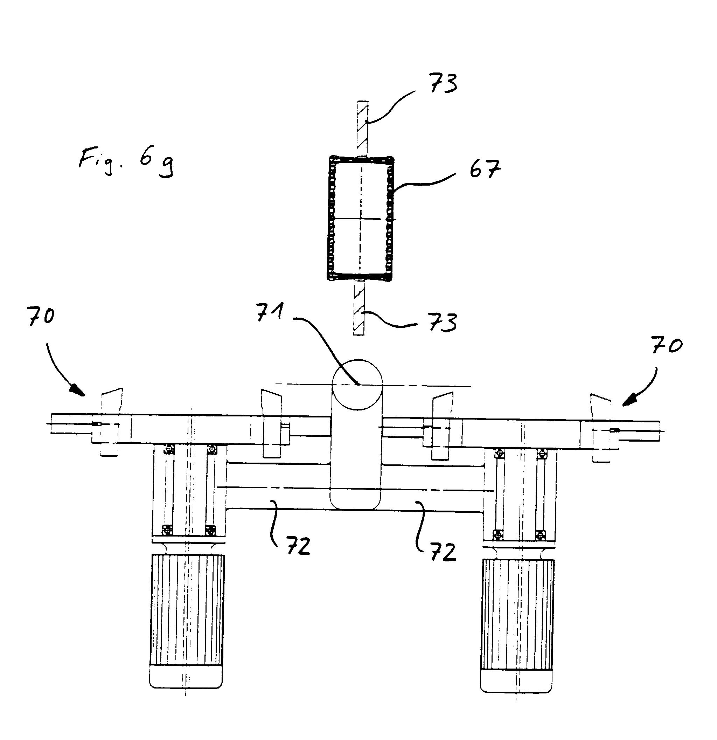

Anhand von Fig. 6a bis 6g soll nun der Herstellungsvorgang im einzelnen erläutert werden.

Nach dem eigentlichen Preßvorgang werden die beiden Hälften jeweils von einem den Formenboden bildenden Heraushebelement 17 aus der Preßform 22 herausgehoben. Anschließend wird von oben ein Kühlstempel 68 in die Hälfte 66 abgesenkt, der in seiner Funktion dem inneren Teil 53 der weiter oben beschriebenen Kühlform entspricht. An den Kühlstempeln 68 mittels Unterdruck gehalten, werden die Hälften 66 einer Verschweißeinrichtung 69 übergeben, wie sie in Fig. 6c dargestellt und bei einer Anordnung gemäß Fig. 5 zwischen den Glaspreßvorrichtungen 100 angeordnet ist.

Die Verschweißvorrichtung 69 umfaßt zwei der Außenkontur einer Hälfte angepaßte Formen 70, welche zusätzlich in der Zeichnung nicht dargestellte Kühleinrichtungen umfassen können.

Nach dem Absetzen der beiden Hälften 66 in die Formen 70 der Verschweißvorrichtung 69, was mit der offenen Seite einer jeden Hälfte 66 nach oben erfolgt, werden diese jeweils von einer gegebenenfalls durch Zusammenfahren der zur Übergabe geöffneten, aus mehreren Teilen bestehenden Form 70 gehalten und die Kühlstempel 68 aus den Hälften 66 herausgefahren. Die Halteformen 70, die auf gekröpften, um einen gemeinsamen Drehpunkt 71 verschwenkbaren Haltearmen 72 angeordnet sind, werden durch gegensinniges Verschwenken der beiden Haltearme 72 um jeweils 90° mit ihren Öffnungen zueinander weisend aufeinanderzu bewegt und in einem definierten, einstellbaren Abstand zueinander gehalten, welcher mit Hilfe des aus der Düse 65 ausgepreßten Glasstrangs durch synchrones Verschieben der beiden Hälften senkrecht zum Glasstrang und Drehen der beiden Hälften mit Hilfe der Antriebseinrichtung 73 ausgefüllt wird.

Nach erfolgtem Verschweißvorgang wird der Glasstrang - beispielsweise mit Hilfe eines starken Luftstroms - abgetrennt und die Injektionsform von dem Bauteil getrennt (Fig. 6f).

Nachdem das Bauteil 67 sich auf eine hierzu geeignete Temperatur abgekühlt hat, wird es mit Hilfe eines in in den Halteformen 70 vorgesehene Aussparungen eingreifenden Greifers eingespannt, die Halteformen werden geöffnet, in ihre Position zur Aufnahme zweier neuer Hälften zurückverschwenkt und der Baustein mit Hilfe des Greifers 73 beispielsweise einem Transportband übergeben.

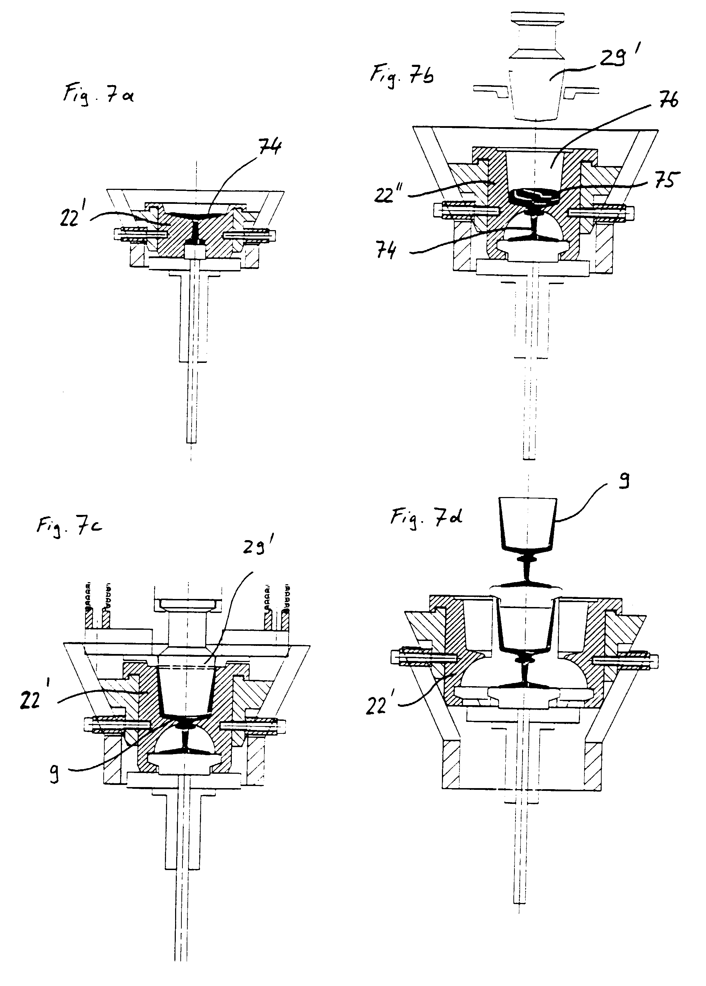

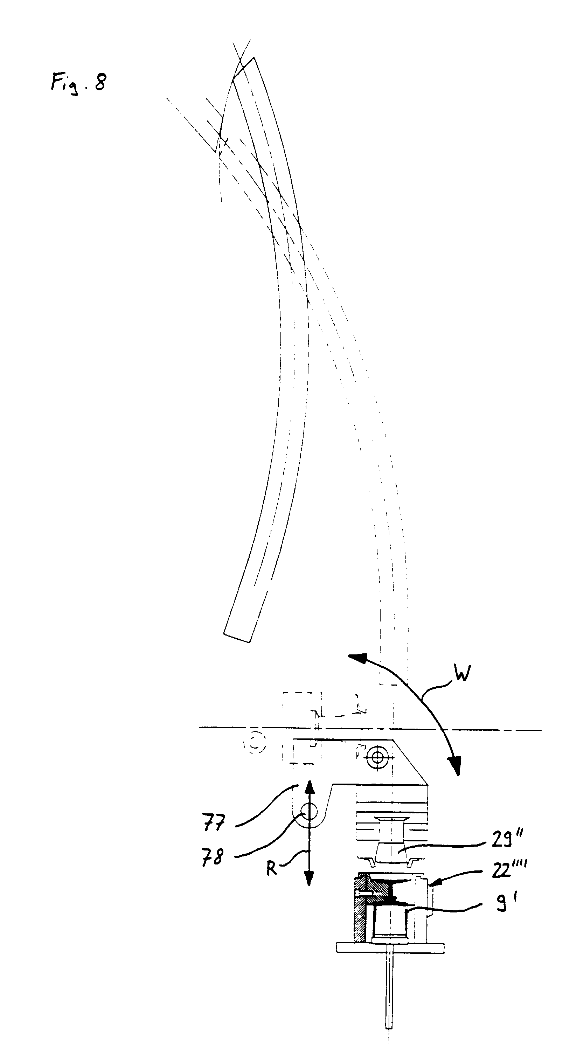

In den Fig. 7a bis 7d sind die Schritte eines weiteren, mit einer erfindungsgemäßen Glaspreßvorrichtung vorteilhaft durchführbaren Verfahrens schematisch dargestellt. Bei diesem Verfahren wird in der Preßform 22' einer ersten, in Fig. 7 nicht dargestellten Glaspreßvorrichtung ein Teil 74 eines Glasformlings - hier der Boden und Stiel eines Stielglases - hergestellt. Zeitgleich wird in einer Preßform 22' einer zweiten, parallel arbeitenden erfindungsgemäßen Glaspreßvorrichtung ein weiterer Teil des Glasformlings - hier der Kelch des Stielglases - an den ersten Teil angeformt. Dazu wird vor der Zugabe einer abgeteilten Menge 75 an schmelzflüssigem Glas ein in einem vorherigen Arbeitstakt hergestellter erster Teil des Glasformlings in die Preßform 22' eingesetzt. Die Preßform 22' ist derart ausgestaltet, daß der mit dem zweiten Teil des Glasformlings zu verbindende Abschnitt des ersten Teils 74 des Glasformlings in den Preßraum 76 hineinragt, so daß dieser mit der abaeteilten Menge 75 an schmelzflüssigem benetzt (s. Fig. 7b). Anschließend wird durch Hineindrükken des Preßstempels 29' in den Preßraum 76 der zweite Teil des Glasformlings ausgeformt und gleichzeitig mit dem ersten Teil fest verbunden (s. Fig. 7c). Nachdem sich zumindest die oberflächennahen Bereiche des Glasformlings auf eine Temperatur abgekühlt haben, die eine Entnahme desselben aus der Preßform 22'' erlaubt, wird dieser, wie in Fig. 8d dargestellt, mit Hilfe eines die mehrteilige Preßform 22'' gleichzeitig öffnenden Herausheberelements 18' der Preßform entnommen und gegebenenfalls anschließend einer in der Zeichnung nicht dargestellten Kühlform übergeben. Besonders von Vorteil ist bei diesem Verfahren, daß die Preßform 22' und die Preßform 22'' zeitgleich mit zwei gegebenenfalls unterschiedlichen Mengen an schmelzflüssigem Glas aus ein und demselben Feeder beschickt werden können, so daß durch eventuell geringfügige Unterschiede in der Glaszusammensetzung hervorgerufene unerwünschte Effekte zuverlässig vermieden werden.

Eine weitere bevorzugte Ausführungsform eines verschwenkbar gelagerten Preßstempels ist in Fig. 8 dargestellt. Bei dieser Ausführungsform ist der Preßstempel 29'' im Endbereich eines der Schenkel eines U-förmigen Halters 77 angebracht, welcher über ein im Endbereich des anderen Schenkels vorgesehenes Lager 78 an einer in der Zeichnung nicht dargestellten Schlittenanordnung verschwenkbar gelagert ist. Zum Pressen eines Glasformlings 9' ist der Preßstempel 29'' in die Preßform 22'''' durch Verlagerung des nicht dargestellten Schlittens in Richtung des Pfeiles R hineindrückbar. Die Stellung des Preßstempels 29'' und des Halters 77 unmittelbar nach einem Preßvorgang ist in Fig. 8 durchgezogen dargestellt. Wie ebenfalls aus Fig. 8 ersichtlich, ist die Zuführrinne 7' während dieses Betriebszustandes derart seitlich verschwenkt, daß sie die Oberseite der Preßform freigibt.

Zur Entnahme des Glasformlings und zur anschließenden erneuten Beschickung der Preßform 22'''' mit einer abgeteilten Menge an schmelzflüssigem Glas ist der Halter 77 um eine durch die Lagerung 78 definierte Achse in Richtung des Pfeiles W in eine in Fig. 8 gestrichelt dargestellte Position um 90° verschwenkbar, in welcher der Preßstempel 29'' die obere Öffnung der Preßform 22'''' vollständig freigibt. Zugleich wird die Zuführrinne 7' in die gestrichelt dargestellte Position verschwenkt, in der ihr Ende mit der Öffnung der Preßform 22'''' kommuniziert.

Wie aus der Darstellung ersichtlich, ist es bei dieser Anordnung insbesondere von Vorteil, daß sich der Preßstempel 29'' in eine Lage verschwenken läßt, die einen nahezu ungehinderten Zugang zu der Preßform ermöglicht. Der Abtransport eines fertigen Glasformlings und die Handhabung der Vorrichtung beispielsweise beim Wechsel der Preßform ist hierdurch erleichtert. Allerdings müssen die von dem Preßstempel 29'' aufzubringenden Preßdrucke von dem Halter 77 übertragen werden, so daß diese Ausführungsform der Glaspreßmaschine lediglich für geringere Preßdrucke geeignet ist.

**Patentansprüche**

1. Verfahren zur Herstellung von Glasformlingen nach dem Preßverfahren, bei dem mit einem Feeder (6) eine abgeteilte Menge schmelzflüssiges Glas in eine die äußere Gestalt des Glasformlings vorgebende Preßform (2,12,22) eingefüllt wird, in die die abgeteilte Menge des schmelzflüssigen Glases während des Preßvorganges mit Hilfe eines aus einer Ausgangslage außerhalb der Preßform in diese hineingedrückten, die innere Form des Glasformlings vorgebenden Preßstempels (4,14,29) hineingepreßt wird, wobei die abgeteilte Menge des schmelzflüssigen Glases der in der Preßstation befindlichen Preßform (2,12,22) vor dem Hineindrükken des Preßstempels (4,14,29) zugeführt und

   der Glasformling nach dem Herausziehen des Preßstempels der in der Preßstation befindlichen Preßform entnommen wird, und wobei der Preßstempel (4,14,29) zum Einfüllen der abgeteilten Menge des schmelzflüssigen Glases und/oder zur Entnahme des Glasformlings aus seiner Ruhelage um eine Achse seitlich verschwenkt wird

   **dadurch gekennzeichnet,**

   daß etwa zeitparallel mehreren in der Preßstation befindlichen Preßformen (12) die abgeteilte Menge des schmelzflüssigen Glases vor dem Hineindrücken des Preßstempels zugeführt wird und mit einer entsprechenden Anzahl von Preßstempeln (14) aus schmelzflüssigem Glas Glasformlinge gepreßt werden und daß die Achse um welche der Preßstempel verschwenkt wird quer zur Längsachse (M') des Preßstempels (4,14,29) verlauft.

2. Verfahren nach Anspruch 1, **dadurch gekennzeichnet,** daß eine mit dem Feeder (6) verbundene Zufuhrleitung (7) aus einer das Hineindrücken des Preßstempels (4) in die Preßform (2) ermöglichenden Ausgangslage zum Befüllen derselben mit der abgeteilten Menge des schmelzflüssigen Glases beim oder nach dem Verschwenken des Preßstempels (4) in eine Position verlagert wird, in der das Ende (8) der Zuführrinne (7) mit der Öffnung der Preßform kommuniziert, und nach Abschluß des Einfüllvorganges in ihre Ausgangslage zurückverlagert wird.

3. Verfahren nach Anspruch 1 oder 2, **dadurch gekennzeichnet,** daß zumindest in zwei Preßformen (12) zeitparallel zu einem Bauteil zusammenfügbare Teilformlinge gepreßt, den Preßformen (12), nachdem sich die Teilformlinge zumindest in ihren oberflächennahen Bereichen auf eine solche Temperatur abgekühlt haben, die eine Entnahme aus den Preßformen erlaubt, entnommen und einer Vorrichtung zum Zusammenfügen der Teilformlinge unter Ausnutzung des in den Teilformlingen gespeicherten Wärmeinhalts übergeben werden.

4. Verfahren nach Anspruch 3, **dadurch gekennzeichnet,** daß in der Preßstation einer Sequenz von Preßformen (22',22") und Preßstempeln, die der aufeinander aufbauenden, schrittweisen Ausformung des Glasformlings dienen, etwa zeitparallel, vorzugsweise genau zeitparallel aus einem Doppeltropfen oder Mehrfach-Tropfenspeiser die benötigte abgeteilte Menge des schmelzflüssigen Glases zugeführt wird, nachdem außer bei der in der Sequenz ersten in die jeweilige Preßform (22") der Teil des Glasformlings aus der in der Sequenz davor befindlichen Preßform (22') eingesetzt worden ist und anschließend etwa zeitparallel die Preßstempel in die zugehörige Preßform hineingedrückt werden, so daß der weitere Teil des Glasformlings dem zuvor in die Preßform eingesetzten angeformt wird.

5. Glaspreßvorrichtung (100) zur Herstellung von Glasformlingen (9) nach dem Preßverfahren, mit einem Gestell (20),

mit einer Preßstation, welche eine die äußere Gestalt des Glasformlings (9) vorgebende Preßform (22,22',22") umfaßt, in welche mit Hilfe eines Feeders eine abgeteilte Menge schmelzflüssigen Glases eingebbar und mittels eines die innere Form des Glasformlings vorgebenden Preßstempels (29,29',29") zu dem Glasformling (9) verpreßbar ist,
mit einem Krafterzeuger, mittels dessen der Preßstempel (29,29',29") aus einer Ausgangslage außerhalb der Preßform in Richtung seiner Längsachse in die Preßform (22,22',22") nach einer vorgegebenen zeitlichen Abhängigkeit von Kraft und Vorschub hineindrückbar ist, und mit einer Einrichtung zum Zurückziehen des Preßstempels nach erfolgtem Preßvorgang, wobei der Preßstempel (29,29',29") aus seiner außerhalb der Preßform (22,22',22") befindlichen Ausgangslage um eine Achse seitlich verschwenkbar ist
insbesondere nach einem Verfahren gemäß einem der Ansprüche 1 bis 4,

**dadurch gekennzeichnet,**

daß mehrere Preßformen (22,22',22",22"') und eine entsprechende Anzahl von Preßstempeln (29,29'), von denen jeder einer Preßform zugeordnet ist, vorgesehen sind, und
daß die Achse um welche der Preßstempel seitlich verschwenkbar ist quer zur Mittelachse (M') des Preßstempels (29,29', 29") verlauft.

6. Vorrichtung nach Anspruch 5, **dadurch gekennzeichnet,** daß eine mit dem Feeder (6) verbundene Zuführrinne (7) vorgesehen ist, die bei seitlich verschwenktem Preßstempel (29,29',29") in eine Position verlagerbar ist, in der ihr Ende mit der Öffnung der Preßform kommuniziert.

7. Vorrichtung nach Anspruch 5 oder 6, **dadurch gekennzeichnet,** daß eine in ihrer Achsrichtung verschiebbar geführte Preßstange (27) vorgesehen ist, die mit ihrem einen Ende mit dem Krafterzeuger zusammenwirkt und deren anderes Ende den Preßstempel (29,29',29") betätigt.

8. Vorrichtung nach einem der Ansprüche 5 bis 7, **dadurch gekennzeichnet,** daß mit dem Gestell (20) der Vorrichtung (100) ein um eine zur Preßrichtung quer verlaufende Schwenkachse schwenkbarer Ausleger (36) verbunden ist, der eine Schienenanordnung (37) umfaßt, die der verschiebbaren Lagerung des Preßstempels (29) mittels einer Schlittenanordnung (35) dient.

9. Vorrichtung nach Anspruch 8, **dadurch gekennzeichnet,** daß sich der Ausleger (37) über eine senkrecht zur Schwenkachse wirkende, längenvariable Schwenkeinrichtung an dem Gestell (20) abstützt.

10. Vorrichtung nach Anspruch 9, **dadurch gekennzeichnet,** daß die längenvariable Schwenkeinrichtung eine mit einem Ende gelenkig an dem Ausleger (36) angebrachte, in ihrer Achsrichtung verschiebbar geführte, federkraftbeaufschlagte Schwenkstange (41) umfaßt, die unter der Federkraft mit ihrem anderen Ende an einer elektromotorisch angetriebenen Kurvenscheibe (46) anliegt.

11. Vorrichtung nach einem der Ansprüche 8 bis 10, **dadurch gekennzeichnet,** daß das den Preßstempel (29) betätigende Ende der Preßstange (27) über ein Kniegelenk (33), welches eine zur Schwenkachse parallele Gelenkachse aufweist, mit dem Preßstempel verbunden ist.

12. Vorrichtung nach einem der Ansprüche 7 bis 11, **dadurch gekennzeichnet,** daß die Mittelachse (M') des Preßstempels (29) während des Preßvorganges etwa mit der Mittelachse (M) der Preßstange (27) fluchtend verläuft.

13. Vorrichtung nach einem der Ansprüche 8 bis 12, **dadurch gekennzeichnet**, daß die Zuführrinne (7) gelenkig an dem Gestell (20) angebracht und mit dem schwenkbaren Ausleger (36) verbunden ist.

14. Vorrichtung nach einem der Ansprüche 5 bis 13, **dadurch gekennzeichnet,** daß der Preßstempel (29,29') aus seiner Ausgangslage um eine etwa senkrecht zur Mittelachse (M') des Preßstempels verlaufende Schwenkachse in Richtung der geschlossenen Seite des Gestells (20) seitlich verschwenkbar ist.

15. Vorrichtung nach einem der Ansprüche 5 bis 7, **dadurch gekennzeichnet,** daß an dem Gestell eine Schienenanordnung angeordnet ist, auf der eine in Preßrichtung verlagerbare Schlittenanordnung vorgesehen ist, an welcher der Preßstempel in die Preßform absenkbar über einen auf der von der geschlossenen Seite des Gestells (20) während des Preßvorganges vorkragenden, bei außerhalb der Preßform befindlichem Preßstempel zur geschlossenen Seite des Gestells (20) um eine im Bereich der Schlittenanordnung liegende Schwenkachse zurückverschwenkbaren Halter (77) angebracht ist.

16. Vorrichtung nach Anspruch 15, **dadurch gekennzeichnet,** daß der Halter (77) etwa U-förmig ausgebildet ist derart, daß während des Preßvorganges die offene Seite des U zu der Preßform (22''') weist und daß durch den einen Schenkel des U die Schwenkachse verläuft, wogegen der andere Schenkel den Preßstempel (29'') trägt.

17. Vorrichtung nach Anspruch 15 oder 16, **dadurch gekennzeichnet**, daß das den Preßstempel (29) betätigende Ende der Preßstange mit der Schlittenanordnung verbunden ist.

18. Vorrichtung nach einem der Ansprüche 5 bis 17, **dadurch gekennzeichnet,** daß der Krafterzeuger eine von einem drehmoment- und drehzahlsteuerbaren Elektromotor angetriebene Kurvenscheibe (25) ist.

19. Vorrichtung nach Anspruch 18, **dadurch gekennzeichnet,** daß der Elektromotor ein Drehstrom-Servomotor ist.

20. Vorrichtung nach einem der Ansprüche 5 bis 19, **dadurch gekennzeichnet,** daß die Einrichtung zum Zurückziehen des Preßstempels eine auf die Preßstange wirkende Gegenkurvenscheibe ist.

21. Vorrichtung nach einem der Ansprüche 5 bis 19, **dadurch gekennzeichnet,** daß die Einrichtung zum Zurückziehen des Preßstempels ein die Preßstange entgegen der Preßrichtung kraftbeaufschlagtes elastisches Element ist.

22. Vorrichtung nach Anspruch 21, **dadurch gekennzeichnet,** daß das elastische Element mindestens eine Schraubenfeder (45) umfaßt.

23. Vorrichtung nach einem der Ansprüche 5 bis 22, **dadurch gekennzeichnet,** daß die Preßformen (22) und Preßstempel (29) zur Ausbildung von zu einem Bauteil zusammenfügbaren Teilformlingen ausgebildet sind.

24. Vorrichtung nach Anspruch 23, **dadurch gekennzeichnet,** daß eine Einrichtung zur Entnahme der zu einem Bauteil zusammenzufügenden Teilformlinge aus den Preßformen und zur Übergabe an eine Vorrichtung zum Zusammenfügen der Teilformlinge vorgesehen ist.

25. Vorrichtung nach Anspruch 24, **dadurch gekennzeichnet,** daß eine Sequenz von Preßformen und Preßstempeln vorgesehen ist, die der schrittweisen Ausformung des Glasformlings dienen.

26. Vorrichtung nach Anspruch 25, **dadurch gekennzeichnet,** daß die Sequenz Preßformen (22',22'') und Preßstempel (29') umfaßt, mit denen bei einem Preßvorgang verschiedene, insgesamt den vollständigen Glasformling ergebende Teile des Glasformlings preßbar sind.

27. Vorrichtung nach Anspruch 26, **dadurch gekennzeichnet,** daß mit Ausnahme der in der Sequenz ersten Preßform die folgenden Preßformen derart ausgestaltet sind, daß der in der Sequenz zuvor gepreßte Teil des Glasformlings in die in der Sequenz folgende Preßform einsetzbar und der in dieser zu pressende Teil zugleich auf den eingesetzten Teil aufpreßbar und ausformbar ist.

**Claims**

1. Process for manufacturing moulded glass articles using a pressing process, in which a metered quantity of molten glass is introduced by means of a feeder (6) into a press mould (2, 12, 22) which determines the external shape of the glass article, in which mould the metered quantity of molten glass is pressed during the pressing process with the aid of a press stamp (4, 14, 29) determining the internal shape of the glass article and pushed from a starting position outside the press mould into the latter during the moulding process, the metered quantity of molten glass being fed into the press mould (2,12, 22) present in the pressing station before the stamp (4,14, 29) is introduced and

the glass article is withdrawn from the press mould present in the pressing station after withdrawal of the stamp, and the stamp (4, 14, 29) is pivoted laterally from its rest position about an axis for introducing the metered quantity of molten glass and/or for removal of the glass article,

**characterised in that,**

approximately simultaneously the metered quantity of molten glass is fed to a number of press moulds (12) present in the pressing station before the introduction of the stamp and glass articles are moulded out of molten glass using a corresponding number of stamps (14) and that the axis about which the stamp is pivoted extends transversely with respect to the longitudinal axis (M') of the stamp (4, 14, 29).

**2.** Process according to claim 1, **characterised in that** a supply pipe (7) connected to the feeder (6) is displaced out of a starting position allowing the introduction of the stamp (4) into the press mould (2) for filling the latter with the metered quantity of the molten glass at or after the pivoting of the press stamp (4) into a position in which the end (8) of the supply channel (7) communicates with the opening of the press mould, and is shifted back into its starting position on completion of the filling process.

**3.** Process according to claim 1 or 2, **characterised in that** part-articles capable of being brought together to form a component are moulded simultaneously at least in two press moulds (12), the press moulds (12), after the part-articles have cooled at least in the parts of them near the surface, to such a temperature as to permit removal from the moulds, are removed and transferred to a device for bringing together the part-articles making use of the heat content stored in the part-articles.

**4.** Process according to claim 3, **characterised in that** in the pressing station a sequence of press moulds (22', 22") and press stamps, which serve for the successive stepwise shaping of the glass article, have fed to them the required metered quantity of molten glass approximately simultaneously and preferably exactly simultaneously, from a double drop or multiple drop feeder, after which apart from in the first in the current press mould (22") in the sequence the part of the glass article from the press mould (22') present in the preceding sequence is introduced and subsequently approximately simultaneously the press stamp is introduced into the associated press mould so that the further part of the glass article is formed onto that which had been previously inserted in the press mould.

**5.** Glass moulding apparatus (100) for producing glass articles (9) by the pressing process,

with a frame (20),
with a pressing station which comprises a press mould (22, 22', 22") determining the external shape of the glass article (9), into which mould a metered quantity of molten glass is capable of being introduced with the aid of a feeder and is capable of being pressed to form the glass article (9) by means of a press stamp (29, 29', 29") determining the inner shape of the glass article,
with a force generator by means of which the press stamp (29, 29', 29") can be pressed in from a starting position outside the press mould in the direction of its longitudinal axis into the press mould (22, 22', 22") according to a predetermined time dependency of force and advance,
and with a device for retracting the press stamp on completion of the pressing process, the press stamp (29, 29', 29") being capable of being pivoted laterally about an axis from its starting position outside the press mould (22, 22', 22")
in particular by a process according to one of claims 1 to 4,

**characterised in that**

a number of press moulds (22, 22', 22", 22"') and a corresponding number of press stamps (29, 29') are provided, each of which has a press mould associated with it, and that the axis about which the press stamp is capable of being pivoted laterally extends transversely with respect to the central axis (M') of the press stamp (29, 29', 29").

**6.** Apparatus according to claim 5, **characterised in that** a feed channel (7) is provided, connected to the feeder (6) and displaceable, on lateral pivoting of the press stamp (29, 29', 29"), into a position in which its end communicates with the opening in the press mould.

**7.** Apparatus according to claim 5 or 6, **characterised**

**in that** a press ram (27) is provided, guided to slide in the direction of its axis and co-operating by means of its one end with a force generator, and of which the other end actuates the press stamp (29, 29', 29'').

8. Apparatus according to one of claims 5 to 7, **characterised in that** a boom (36) which can pivot about a pivotal axis extending transverse to the direction of pressing is connected to the frame (20) of the apparatus (100) and includes a rail arrangement (37) which serves for the slidable mounting of the press stamp (29) by means of a slide arrangement (35).

9. Apparatus according to claim 8, **characterised in that** the boom (37) is supported on the frame (20) through a pivoting device of variable length acting at right angles to the pivotal axis.

10. Apparatus according to claim 9, **characterised in that** the pivoting device of variable length comprises a pivoting bar (41) which is acted on by spring force and mounted pivotally by one end on the boom (36) and guided to be displaced in the direction of its axis, the bar engaging under the spring force with its other end against a cam (46) driven by an electric motor.

11. Apparatus according to one of claims 8 to 10, **characterised in that** the end of the press ram (27) which actuates the press stamp (29) is connected to the press stamp through a toggle link (33) which has a pivotal axis parallel to the axis of swinging.

12. Apparatus according to one of claims 7 to 11, **characterised in that** the central axis (M') of the press stamp (29) extends approximately in alignment with the central axis (M) of the ram (27) during the moulding process.

13. Apparatus according to one of claims 8 to 12, **characterised in that** the supply channel (7) is mounted pivotally on the frame (20) and is connected to the pivoting boom (36).

14. Apparatus according to one of claims 5 to 13, **characterised in that** the press stamp (29, 29') is capable of pivoting laterally from its starting position about a pivotal axis extending approximately perpendicular to the central axis (M') of the press stamp, towards the closed side of the frame (20).

15. Apparatus according to one of claims 5 to 7, **characterised in that** there is mounted on the frame a rail arrangement on which a slide arrangement is provided, displaceable in the pressing direction and on which the press stamp is mounted in a manner capable of being lowered into the press mould through a holder (77) capable of being swung back about a pivotal axis lying in the region of the slide arrangement, projecting forward from the closed side of the frame (20) during the pressing process towards the closed side of the frame 20, when the press stamp is present outside the press mould.

16. Apparatus according to claim 15, **characterised in that** the holder (77) is approximately U-shaped in such a way that during the pressing process the open side of the U is towards the press mould (22''') and that the pivotal axis extends through the one limb of the U whereas the other limb carries the press stamp (29'').

17. Apparatus according to claim 15 or 16, **characterised in that** the end of the press ram which actuates the press stamp (29) is connected to the slide arrangement.

18. Apparatus according to one of claims 5 to 17, **characterised in that** the force generator is a cam (25) driven by an electric motor of which the torque and speed can be controlled.

19. Apparatus according to claim 18, **characterised in that** the electric motor is a three-phase servo motor.

20. Apparatus according to one of claims 5 to 19, **characterised in that** the device for retracting the press stamp is an opposing cam acting on the ram.

21. Apparatus according to one of claims 5 to 19, **characterised in that** the device for retracting the press stamp is an elastic element urging the ram in a direction opposite the pressing direction.

22. Apparatus according to claim 21, **characterised in that** the elastic element comprises at least one coil spring (45).

23. Apparatus according to one of claims 5 to 22, **characterised in that** the press moulds (22) and press stamps (29) are designed for forming part-articles capable of being brought together to form one body.

24. Apparatus according to claim 23, **characterised in that** a device is provided for removing the part-articles, to be brought together to form one body, out of the press moulds and transferring them to a device for bringing the part-articles together.

25. Apparatus according to claim 24, **characterised in that** a sequence of press moulds and press stamps is provided, serving for the stepwise shaping of the glass article.

26. Apparatus according to claim 25, **characterised in**

**that** the sequence comprises press moulds (22', 22"), and press stamps (29'), by means of which in one pressing process different parts of the glass article are capable of being pressed, resulting overall in the finished glass article.

27. Apparatus according to claim 26, **characterised in that** with the exception of the first press mould in the sequence the subsequent press moulds are of such a shape that the part of the glass article pressed previously in the sequence is capable of being introduced into the subsequent press mould in the sequence and the part to be pressed in this is in addition capable of being pressed onto the inserted part and shaped.

**Revendications**

1. Procédé de fabrication d'articles moulés en verre par un procédé par compression, dans lequel avec un feeder (6) on introduit un lot de verre en fusion (ou paraison) dans un moule (2, 12, 22) reproduisant la forme extérieure de l'article moulé en verre, moule dans lequel le lot de verre en fusion est comprimé pendant le processus de pressage à l'aide d'un poinçon de pressage (4, 14, 29) imprimant dans le verre à partir d'une position de départ en dehors du moule, la forme intérieure de l'article moulé en verre, procédé dans lequel le lot de verre en fusion est amené au moule (2, 12, 22) se trouvant dans la station de pressage avant l'action de compression interne du poinçon (4, 14, 29) et l'article moulé en verre est retiré après la compression du poinçon de la presse se trouvant dans la station de pressage et le poinçon (4, 14, 29) pour introduire le lot de verre fondu et/ou pour prélever l'article moulé en verre de sa position de repos se déplace autour d'un axe transversal à l'axe longitudinal (M') du poinçon (4, 14, 29) et est mis en pivotement latéral,
caractérisé en ce que

- les paraisons sont amenées sensiblement en même temps dans plusieurs moules (12) se trouvant dans la station de pressage avant l'opération de compression intérieure du poinçon et sont pressées à partir d'un nombre correspondant de poinçons (14) en articles moulés en verre fondu et
- l'axe autour duquel le poinçon est mis en pivotement.

2. Procédé selon la revendication 1,
caractérisé en ce qu'
une conduite d'amenée (7) liée au feeder (6) est déplacée, d'une position de départ rendant possible la compression intérieure du poinçon (4) dans le moule (2), pour le remplissage de celui-ci avec le lot du verre fondu lors ou après le pivotement du poinçon (4) dans une position, dans laquelle l'extrémité (8) de la goulotte d'amenée (7) communique avec l'orifice du moule, et après la fin du processus de remplissage elle est ramenée dans sa position de départ.

3. Procédé selon les revendications 1 ou 2,
caractérisé en ce que
des articles moulés en verre pressés au moins dans deux moules (12) en parallèle dans le temps pouvant être assemblés en une pièce de construction sont retirés des moules (12), après que les pièces moulées en verre se sont refroidies dans leurs zones superficielles à une température telle, qu'elle permet un retrait des moules et elles sont cédées à un dispositif de réunion des articles moulés tout en exploitant le contenu thermique emmagasiné dans les pièces.

4. Procédé selon la revendication 3,
caractérisé en ce que
la paraison nécessaire de verre fondu est amenée à la station de pressage selon une séquence des moules (22', 22") et des poinçons, qui servent au formage des articles moulés en verre pas-à-pas, se structurant l'un après l'autre, à peu près en parallèle dans le temps, de préférence exactement en parallèle dans le temps à partir d'une masselotte à double paraison ou à plusieurs paraisons, après que à l'exception du premier article de la séquence, la partie de l'article moulé en verre provenant du moule (22') se trouvant devant dans la séquence a été introduite dans le moule respectif (22") et ensuite sensiblement en parallèle dans le temps les poinçons ont été comprimés à l'intérieur du moule correspondant de sorte que l'autre partie de l'article moulé en verre est adaptée à celle introduite précédemment dans le moule.

5. Dispositif de pressage de verre (100) pour la production d'articles moulés en verre (9) selon le procédé de pressage, avec un châssis (20) comportant :

- une station de pressage, qui comprend un moule (22, 22', 22") préfixant la forme extérieure du corps moulé en verre (9), dans lequel peut être introduite à l'aide d'un feeder une paraison de verre fondu et celle-ci peut être comprimée en l'article moulé en verre (9) au moyen d'un poinçon (29, 29', 29") préfigurant la forme intérieure du corps moulé en verre,
- un générateur d'énergie, au moyen duquel le poinçon (29, 29', 29") peut être introduit à partir d'une position de départ en dehors du moule dans le sens de son axe longitudinal à l'intérieur du moule (22, 22', 22") selon une fonction de force et d'avancement préétablie dans le temps, et

- un dispositif pour retirer le poinçon selon le processus de pressage suivi, le poinçon (29, 29', 29") se déplaçant de sa position de départ se trouvant en dehors du moule (22, 22', 22") autour d'un axe pouvant pivoter latéralement,
- en particulier selon un procédé conforme à l'une des revendications 1 à 4,

caractérisé en ce que

- sont prévus plusieurs moules (22, 22', 22", 22"') et un nombre correspondant de poinçons (29, 29'), chacun desquels étant associé à un moule, et
- l'axe autour duquel peut pivoter latéralement le poinçon se développe transversalement à l'axe central (M') du poinçon (29, 29', 29").

6. Dispositif selon la revendication 5,
caractérisé en ce qu'
est prévue une goulotte d'amenée (7) reliée au feeder (6), qui peut être déplacée lors du pivotement latéral du poinçon (29, 29', 29") dans une position, dans laquelle son extrémité communique avec l'orifice du moule.

7. Dispositif selon la revendication 5 ou 6,
caractérisé en ce qu'
est prévue une barre de pressage (27) guidée et pouvant coulisser dans le sens de son axe, qui coopère par une de ses extrémités avec le générateur d'énergie et dont l'autre extrémité actionne le poinçon de pressage (29, 29', 29").

8. Dispositif selon une des revendications 5 à 7,
caractérisé en ce qu'
au châssis (20) du dispositif (100) est liée une console pouvant pivoter autour d'un axe se développant transversalement au sens de pressage, console qui comprend un dispositif de rail (37), qui sert au placement modifiable du poinçon (29) au moyen d'un dispositif de glissoire (35).

9. Dispositif selon la revendication 8,
caractérisé en ce que
la console (37) s'appuie sur un dispositif pivotant perpendiculairement par rapport à l'axe de pivotement, de longueur variable contre le châssis (20).

10. Dispositif selon la revendication 9,
caractérisé en ce que
le dispositif pivotant de longueur variable comporte une barre de pivotement (41) fixée par articulations à une extrémité à la console (36), guidée en déplacement dans le sens de son axe, soumise à la force d'un ressort, qui adhère sous la contrainte d'un ressort par son autre extrémité à une came (46) mue par un moteur électrique.

11. Dispositif selon une des revendications 8 à 10,
çaractérisé en ce que
l'extrémité de la barre de pression (27) agissant sur le poinçon (29) par l'intermédiaire d'une articulation à genouillère (33), qui comprend un axe d'articulation parallèle à l'axe de pivotement, est reliée au poinçon.

12. Dispositif selon une des revendications 7 à 11,
caractérisé en ce que
l'axe central (M') du poinçon (29) se développe sensiblement en alignement avec l'axe central (M) de la barre de pression.

13. Dispositif selon une des revendications 8 à 12,
caractérisé en ce que
la goulotte d'amenée (7) est articulée aux châssis (20) et est reliée à la console pivotante (36).

14. Dispositif selon une des revendications 5 à 13,
caractérisé en ce que
le poinçon (29, 29') peut pivoter latéralement hors de sa position de départ autour d'un axe de pivotement se développant sensiblement perpendiculairement à l'axe central (M') du poinçon en direction du côté fermé du châssis (20).

15. Dispositif selon une des revendications 5 à 7,
caractérisé en ce que
sur le châssis est monté un dispositif de rail, sur lequel est prévu un dispositif de glissoire déplaçable dans le sens du pressage, sur lequel est fixé le poinçon à déplacement vers le bas, par l'intermédiaire d'un support (77) faisant saillie du côté de la face fermée du châssis (20) pendant le processus de pressage, pouvant pivoter en arrière lorsque le poinçon se trouve en dehors du moule par rapport à la face fermée du châssis (20) autour d'un axe se situant dans la zone du dispositif à glissoire.

16. Dispositif selon la revendication 15,
caractérisé en ce que

- le support (77) est réalisé sensiblement en forme de U, de manière que pendant l'opération de pressage la face ouverte du U regarde vers le moule (22"') et
- l'axe de pivotement se développe à travers l'une des branches du U, tandis que l'autre branche du U porte le poinçon (29").

17. Dispositif selon la revendication 15 ou 16,
caractérisé en ce que
l'extrémité de la barre de pressage actionnant le moule (29) est liée au dispositif à glissoire.

18. Dispositif selon une des revendications 5 à 17, caractérisé en ce que
le générateur d'énergie est un disque à came (25) commandé par un moteur électrique pouvant entraîner un couple de rotation et une vitesse de rotation.

19. Dispositif selon la revendication 18, caractérisé en ce que
le moteur électrique est un servomoteur à courant triphasé.

20. Dispositif selon une des revendications 5 à 19, caractérisé en ce que
le dispositif pour le retrait du poinçon est une came à courbe opposée agissant sur la barre de pressage.

21. Dispositif selon une des revendications 5 à 19, caractérisée en ce que
le dispositif de retrait du poinçon est un élément élastique sollicitant par la force la barre de pressage dans le sens contraire au sens de pressage.

22. Dispositif selon la revendication 21, caractérisé en ce que
l'élément élastique comprend au moins un ressort cylindrique.

23. Dispositif selon une des revendications 5 à 22, caractérisé en ce que
les moules (22) et les poinçons (29) sont réalisés pour former des articles moulés partiels assemblés à un élément de construction.

24. Dispositif selon la revendication 23, caractérisé en ce qu'
est prévu un appareillage pour enlever les articles moulés partiels à adapter à un élément de construction hors des moules et pour céder ces articles moulés partiels à un dispositif destiné à les assembler.

25. Dispositif selon la revendication 24, caractérisé en ce qu'
est prévu une séquence de moules et de poinçons, qui servent progressivement au formage de l'article moulé en verre.

26. Dispositif selon la revendication 25, caractérisé en ce que
la séquence comprend des moules (22', 22") et des poinçons (29'), avec lesquels on peut presser dans une opération de pressage des pièces de l'article moulé en verre permettant d'obtenir au total l'article moulé complet.

27. Dispositif selon la revendication 26, caractérisé en ce qu'
à l'exception du premier moule dans la séquence, les moules suivants sont formés de manière que la partie de l'article moulé en verre pressée précédemment dans la séquence peut être introduite dans le moule suivant dans la séquence et que la partie à presser dans celui-ci peut être à la fois engagée par pression et mise en forme dans la partie insérée.

Fig. 1

EP 0 787 111 B1

Fig. 2

Fig. 3

9

48

47

10

Fig. 4

Einzelheit B

54

B

55

54

52

51

P'  P'  P'

55

53

56  57  56'

58  58

P

P

P

P

51'  51'

Fig. 5

Fig. 6a

Fig. 6b

Fig. 6c

Fig. 6d

Fig. 6e

Fig. 6 f

Fig. 6g

Fig. 7a

Fig. 7b

Fig. 7c

Fig. 7d

Fig. 8